# EUROPÄISCHE PATENTSCHRIFT

(11) **EP 2 602 678 B1**
(45) Veröffentlichungstag und Bekanntmachung des Hinweises auf die Patenterteilung: **13.08.2014**
(21) Anmeldenummer: 11192361.1
(22) Anmeldetag: 07.12.2011
(51) Int. Cl.: G06F 9/45, G05B 19/042, G05B 19/05

(54) **Verfahren zum Übersetzen eines in einer Automatisierungssprache vorliegenden Steuerungsprogramms in eine Zwischensprache**
Method for translating a control program in an automated language to an intermediate language
Procédé de traduction d'un programme de commande disponible dans un langage d'automatisation en un langage intermédiaire

(43) Veröffentlichungstag der Anmeldung: 12.06.2013
(73) Patentinhaber: Siemens Aktiengesellschaft, 80333 München (DE)
(72) Erfinder: Schmuck, Axel, 76149 Karlsruhe (DE)

(56) Entgegenhaltungen:
- EP-A1- 1 795 999
- DE-A1- 10 235 504
- EMMELMANN H ET AL: "BEG-a generator for efficient back ends", ACM SIGPLAN NOTICES, ACM, ASSOCIATION FOR COMPUTING MACHINERY, NEW YORK, NY, US, Bd. 24, Nr. 7, 1. Juli 1989 (1989-07-01), Seiten 227-237, XP002380273, ISSN: 0362-1340, DOI: 10.1145/74818.74838 ISBN: 978-1-58113-450-6

## Beschreibung

Die Erfindung betrifft ein Verfahren zum automatischen Übersetzen eines in einer Automatisierungssprache vorliegenden Steuerungsprogramms in eine Zwischensprache sowie ein nach dem Verfahren arbeitendes Computerprogramm, speziell eine so genannte Entwicklungsumgebung zur Erstellung und Wartung von Steuerungsprogrammen als Automatisierungslösung für einen zu steuernden und/oder zu überwachenden technischen Prozess, und sodann ein Gerät in Form von oder nach Art eines Programmiergeräts, auf dem ein solches Computerprogramm/eine solche Entwicklungsumgebung ausgeführt wird oder ausführbar ist.

Für die Erstellung von Steuerungsprogrammen zur Steuerung und/oder Überwachung technischer Prozesse (Automatisierungslösung) ist bekannt, dass ein Programmierer in einem so genannten Editor, der z. B. Bestandteil einer Entwicklungsumgebung ist, sein jeweiliges Steuerungsprogramm erstellt. Dabei verwendet er unter anderem Basisoperationen, welche von der jeweiligen Automatisierungssprache (Programmiersprache) angeboten werden. Wenn die Erstellung des Steuerungsprogramms abgeschlossen ist, wird dieses in ausführbaren Code übersetzt. Im Rahmen der Übersetzung des erstellten Steuerungprogramms in ausführbaren Code ist mitunter vorgesehen, dass das erstellte Steuerungsprogramm in einem ersten Schritt in eine einfache Zwischensprache umgesetzt wird, nämlich eine in der Fachterminologie auch als Intermediate Representation bezeichnete Darstellung. Dies erleichtert die Erzeugung von ausführbarem Code für unterschiedliche Prozessoren der jeweiligen Automatisierungsgeräte, also z. B. speicherprogrammierbare Steuerungen, dezentrale Feldgeräte, Antriebssteuerungen, usw., auf denen das Steuerungsprogramm zur Steuerung des jeweiligen technischen Prozesses ausgeführt wird.

Die in dem Steuerungsprogramm enthaltenen Basisoperationen müssen dabei in eine Folge von Befehlen in der Zwischensprache abgebildet werden, d. h. eine Basisoperation wird in jeweils mindestens einen Befehl in der Zwischensprache umgesetzt. Beim Übersetzen des Programms in die Zwischensprache erkennt eine dafür vorgesehene Funktionalität, also z. B. ein so genannter Compiler, eine Basisoperation und transformiert diese in eine entsprechende Befehlsfolge in der Zwischensprache. Eine einer solchen Umsetzung zugrunde liegende Transformationsvorschrift ist in den Compiler integriert.

Aus der DE 102 35 504 A1 ist ein Verfahren bekannt, bei dem ein Steuerungsprogramm in einem Quellcode in einen Zwischencode umgewandelt wird und dabei jede Basisoperation um Protokollierungsanweisungen ergänzt wird, so dass bei zum Beispiel aus mehreren Basisoperationen zusammengesetzten Anweisungen auch sämtliche Zwischenergebnisse, die ansonsten nur für kurze Zeit als Inhalte von speziellen Prozessorregistern zur Verfügung stehen, protokolliert werden. Aus der EP 1 795 999 A1 ist ein Verfahren zur Transformation von Elementen eines in einer Kontaktplandarstellung vorliegenden Steuerungsprogramms in eine Funktionsplandarstellung bekannt, bei dem bei einer Mehrzahl gleicher Basisoperationen in der Kontaktplandarstellung, zum Beispiel einer Mehrzahl von UND-Verknüpfungen, in der Funktionsplandarstellung ein UND-Gatter mit einer der Anzahl der vorherigen UND-Verknüpfungen entsprechenden Anzahl von Eingängen erzeugt wird.

Nachteilig bei einem Verfahren, das äuf die Transformation von Basisoperationen in eine Befehlsfolge in der Zwischensprache beschränkt ist, ist, dass die Definition und Verwendung neuer Basisoperationen in der Programmiersprache nur möglich ist, wenn der Compiler so erweitert wird, dass dieser eine neue Basisoperation erkennt und entsprechend behandelt.

Eine Aufgabe der vorliegenden Erfindung besteht entsprechend darin, ein Verfahren zum automatischen Übersetzen eines in einer Automatisierungssprache vorliegenden Steuerungsprogramms in eine Zwischensprache anzugeben, das sich in dieser Hinsicht durch zusätzliche Flexibilität auszeichnet und insbesondere die Ergänzung neuer Basisoperationen für die Automatisierungssprache und entsprechender Transformationsvorschriften für deren Umsetzung in die Zwischensprache erlaubt.

Diese Aufgabe wird erfindungsgemäß mit den Merkmalen des Anspruchs 1 gelöst. Dazu ist bei einem Verfahren der eingangs genannten Art, wobei das Steuerungsprogramm eine Mehrzahl von Basisoperationen umfasst und wobei jede Basisoperation automatisch in einer Folge von Befehlen in der Zwischensprache abgebildet wird, vorgesehen, dass zum automatischen Übersetzen des Steuerungsprogramms in die Zwischensprache auf eine Spezifikationsdatenbasis zugegriffen wird, die für zumindest eine Vielzahl von in einem Steuerungsprogramm verwendbaren Basisoperationen in der Automatisierungssprache jeweils eine Transformationsvorschrift umfasst, dass die Transformationsvorschrift die Verarbeitung einer Eingangsparameterliste erlaubt und dass bei einem Aufruf einer Transformationsvorschrift mit einer Eingangsparameterliste mit einer in der Transformationsvorschrift nicht begrenzten Mehrzahl von Eingangsparametern die Transformationsvorschrift die Einbeziehung einer weiteren Transformationsvorschrift definiert, wobei die weitere Transformationsvorschrift eine rekursive Einbeziehung der weiteren Transformationsvorschrift entsprechend einer Anzahl der Eingangsparameter definiert.

Der Vorteil der Erfindung besteht zunächst bereits darin, dass mit der Verwendung der Spezifikationsdatenbasis die Transformationsvorschriften nicht mehr notwendig Bestandteil des Compilers sind. Tatsächlich kann die Spezifikationsdatenbasis im Einzelfall als verteilte Spezifikationsdatenbasis ausgeführt sein, wobei ein erster Teil der Spezifikationsdatenbasis Teil des Compilers ist und ein zweiter Teil der Spezifikationsdatenbasis nicht vom Compiler umfasst ist, aber so verfügbar gemacht wird, dass der Compiler jederzeit Zugriff auf diesen Teil der Spezifikationsdatenbasis erhält. Die weitere Beschreibung wird für eine Spezifikationsdatenbasis fortgesetzt, die in ihrer Gesamtheit nicht vom Compiler umfasst ist. Systematisch besteht, soweit die nachfolgende Beschreibung betroffen ist, zwischen beiden Ausführungsvarianten kein Unterschied, weil im Vordergrund steht, dass zumindest ein Teil der Spezifikationsdatenbasis nicht vom Compiler umfasst ist und damit auch unabhängig vom Compiler änderbar ist, so dass die Spezifikationsdatenbasis oder ein nicht vom Compiler umfasster Teil derselben jederzeit ergänzt oder modifiziert werden kann.

Ein weiterer Vorteil der Erfindung besteht darin, dass die Transformationsvorschrift die Verarbeitung einer Eingangs-parameterliste erlaubt, und zwar speziell auch solche Eingangsparameterlisten mit einer nicht begrenzten Mehrzahl von Eingangsparametern. Eine Transformationsvorschrift mit einer nicht begrenzten Mehrzahl von Eingangsparametern ist in der Spezifikationsdatenbasis als Grundlage für eine Transformation einer Basisoperation vorgesehen, die ebenfalls eine nicht begrenzte Mehrzahl von Parametern aufweisen kann. Als Beispiel für eine solche Basisoperation mag eine logische UND-Verknüpfung dienen, die bekanntlich eine Verknüpfung einer grundsätzlich unbegrenzten Anzahl von Parametern erlaubt.

Bei einem solchen Szenario ist vorgesehen, dass zur Umsetzung einer Basisoperation mit einer Mehrzahl von Parametern die jeweilige Transformationsvorschrift mit einer Eingangsparameterliste aufgerufen wird, in der alle bei der Basisoperation vorgesehenen Parameter zusammengefasst sind. Um dies zu ermöglichen, um also eine Übergabe einer vorher nicht bekannten Anzahl von Parametern an die jeweilige Transformationsvorschrift zuzulassen, ist vorgesehen, dass in der Transformationsvorschrift die jeweilige Anzahl der Eingangsparameter nicht begrenzt ist. Darüber hinaus definiert die Transformationsvorschrift zum Abarbeiten der übergebenen Parameter die Einbeziehung einer weiteren Transformationsvorschrift und diese weitere Transformationsvorschrift definiert ihrerseits die Einbeziehung derselben weiteren Transformationsvorschrift entsprechend einer Anzahl der Parameter der zugrunde liegenden Basisoperation. Die zunächst aufgerufene Transformationsvorschrift kann dabei als äußere Transformationsvorschrift aufgefasst werden und die in dieser äußeren Transformationsvorschrift einbezogene weitere Transformationsvorschrift entsprechend als innere Transformationsvorschrift. Ausgehend von der äußeren Transformationsvorschrift wird demnach die innere Transformationsvorschrift entsprechend der Anzahl der an die äußere Transformationsvorschrift mit der nicht begrenzten Eingangsparameterliste übergebenen Anzahl der Eingangsparameter einbezogen. Die tatsächliche Umsetzung der Funktionalität der zugrunde liegenden Basisoperation erfolgt dann in der weiteren, inneren Transformationsvorschrift.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens ist vorgesehen, dass eine Transformationsvorschrift mit einer in der Transformationsvorschrift nicht begrenzten Mehrzahl von Eingangsparametern in der zur Einbeziehung vorgesehenen weiteren, inneren Transformationsvorschrift zumindest einen ersten und einen zweiten Implementationsblock umfasst, wobei zumindest ein erster Implementationsblock eine Übersetzung der zugrunde liegenden Basisoperation für einen Fall einer festen Anzahl von Eingangsparametern definiert und wobei der zweite Implementationsblock eine Übersetzung der zugrunde liegenden Basisoperation für den Fall mehrerer Eingangsparameter definiert. Zumindest der zweite Implementationsblock umfasst dabei die rekursive Einbeziehung derselben weiteren, inneren Transformationsvorschrift. Damit kann z. B. ein erster Implementationsblock für die Behandlung einer Situation mit genau einem Eingangsparameter, ein weiterer erster Implementationsblock für die Behandlung einer Situation mit z. B. genau zwei Eingangsparametern und ein nochmals weiterer erster Implementationsblock für die Behandlung einer Situation mit z. B. genau drei Eingangsparametern usw. vorgesehen sein.

Bei einer speziellen Ausführungsform des Verfahrens ist vorgesehen, dass eine Transformationsvorschrift mit einer in der Transformationsvorschrift nicht begrenzten Mehrzahl von Ein-gangsparametern in der zur Einbeziehung vorgesehenen weiteren, inneren Transformationsvorschrift zumindest einen ersten und einen zweiten Implementationsblock umfasst, wobei der erste Implementationsblock eine Übersetzung der zugrunde liegenden Basisoperation für den Fall genau eines Eingangsparameters definiert und wobei der zweite Implementationsblock eine Übersetzung der zugrunde liegenden Basisoperation für den Fall mehrerer Eingangsparameter definiert und die rekursive Einbeziehung derselben weiteren, inneren Transformationsvorschrift umfasst.

Die Bezeichnung der bei der Umsetzung einer Basisoperation mit einer nicht vorherbestimmten Parameteranzahl involvierten Transformationsvorschriften als Transformationsvorschrift und weitere Transformationsvorschrift bzw. äußere Transformationsvorschrift und innere Transformationsvorschrift soll das Verständnis erleichtern. Tatsächlich rechtfertigt sich die Bezeichnung der zunächst involvierten Transformationsvorschrift als äußere Transformationsvorschrift dadurch, dass die Umsetzung der Basisoperation in den Zwischencode zunächst diese äußere Transformationsvorschrift verwendet. Hinsichtlich des auf die Spezifikationsdatenbasis zugreifenden Compilers kann diese Verwendung der äußeren Transformationsvorschrift auch als Aufruf der äußeren Transformationsvorschrift in der Spezifikationsdatenbasis verstanden werden. Die äußere Transformationsvorschrift definiert selbst eine zur eigentlichen Umsetzung der zugrunde liegenden Basisoperation notwendige weitere Transformationsvorschrift, nämlich die innere Transformationsvorschrift. Diese Bezeichnung als innere Transformationsvorschrift bedeutet nicht notwendig, dass die innere Transformationsvorschrift von der äußeren Transformationsvorschrift nach Art eines Unterprogramms oder dergleichen umfasst ist, sondern soll nur die hierarchische Abhängigkeit der beiden Transformationsvorschriften definieren. Die innere Transformationsvorschrift wird also durch den Compiler niemals direkt aufgerufen, sondern nur dann, wenn eine äußere Transformationsvorschrift eine Notwendigkeit eines Aufrufs einer solchen inneren Transformationsvorschrift definiert. Die innere Transformationsvorschrift ist für einen rekursiven Aufruf vorgesehen und ein solcher rekursiver Aufruf erfolgt so oft, wie dies die Anzahl der Parameter der ursprünglich zugrunde liegenden Basisoperation und damit die Anzahl der an die äußere Transformationsvorschrift übergebenen Eingangsparameter erfordert.

Zur Realisierung der inneren Transformationsvorschrift ist vorgesehen, dass diese einen ersten und einen zweiten Implementationsblock umfasst und dass der erste Implementationsblock eine Übersetzung der zugrunde liegenden Basisoperation für den Fall genau eines Eingangsparameters definiert. Der zweite Implementationsblock ist dann für die Übersetzung der zugrunde liegenden Basisoperation für den Fall mehrerer Eingangsparameter vorgesehen und umfasst die rekursive Einbeziehung der jeweiligen inneren Transformationsvorschrift, also den mehrmaligen Aufruf der inneren Transformationsvorschrift selbst, entsprechend der jeweiligen Anzahl der Parameter.

Bei einer besonderen Ausführungsform des Verfahrens ist vorgesehen, dass in der Spezifikationsdatenbasis jede Transformationsvorschrift in einem maschinenlesbaren Code, insbesondere einem XML-Code, definiert ist. Ein solcher maschinenlesbarer Code in der Spezifikationsdatenbasis hat den Vorteil, dass der Compiler die Spezifikationsdatenbasis und die dort hinterlegten Definitionen von Transformationsvorschriften unmittelbar verarbeiten kann. Wenn als maschinenlesbarer Code ein XML-Code verwendet wird, ergibt sich der Vorteil, dass ein solcher XML-Code einerseits maschinenlesbar ist, andererseits aber auch für einen versierten Programmierer noch verständlich ist, so dass auch manuelle Änderungen an der Definition der Transformationsvorschriften in der Spezifikationsdatenbasis möglich bleiben.

Die oben genannte Aufgabe wird auch mit einer Entwicklungsumgebung zur Erstellung und Wartung von Steuerungsprogrammen als Automatisierungslösung für einen zu steuernden technischen Prozess gelöst, indem eine solche Entwicklungsumgebung eine Implementation des Verfahrens wie hier und nachfolgend beschrieben mit einer Zugriffsmöglichkeit auf eine Spezifikationsdatenbasis umfasst, wobei die Spezifikationsdatenbasis für zumindest eine Vielzahl von in einem Steuerungsprogramm verwendbaren Basisoperationen in der Automatisierungssprache jeweils eine Transformationsvorschrift umfasst. Die Erfindung ist insoweit in Software implementiert und betrifft damit auch ein Computerprogramm mit Programmcodemitteln, um alle Schritte zur Realisierung des Verfahrens und gegebenenfalls einzelne Ausgestaltungen durchzuführen, wenn das Computerprogramm, also z. B. eine Entwicklungsumgebung der oben genannten Art oder eine Teilfunktionalität einer solchen Entwicklungsumgebung, auf einem Programmiergerät zur Erstellung und Wartung von Steuerungsprogrammen als Automatisierungslösung für einen zu steuernden technischen Prozess ausgeführt wird.

Die Erfindung ist damit schließlich auch ein Programmiergerät zur Erstellung und Wartung von Steuerungsprogrammen als Automatisierungslösung für einen zu steuernden technischen Prozess, wobei das Programmiergerät in an sich bekannter Art und Weise eine Verarbeitungseinheit in Form von oder nach Art eines Mikroprozessors und einen Speicher aufweist, wobei in den Speicher ein Computerprogramm wie oben skizziert und nachfolgend mit weiteren Details beschrieben geladen ist, das im Betrieb des Programmiergeräts durch die Verarbeitungseinheit ausgeführt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung Abänderungen und Modifikationen möglich, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:
- FIG 1: ein Automatisierungssystem zur Steuerung eines technischen Prozesses gemäß einem mit einer dafür vorgesehenen Entwicklungsumgebung erstellten Steuerungs-programm,
- FIG 2: ein Steuerungsprogramm in einem Quellcode mit einer Mehrzahl von Basisoperationen einer jeweils verwendeten Automatisierungssprache, sodann ein Steuerungs-programm in einem Zwischencode mit einer jeweils eine Basisoperation abbildenden Folge von Befehlen in einer Zwischensprache und schließlich ein Steuerungs-programm in einer Maschinensprache,
- FIG 3: eine graphische Veranschaulichung einer Abbildung einer Basisoperation in eine Folge von Befehlen in der Zwischensprache mittels einer Transformationsvorschrift,
- FIG 4: eine graphische Veranschaulichung einer Entwicklungsumgebung mit einem Editor und einem Compiler, wobei die Entwicklungsumgebung, speziell deren Compiler, auf eine Spezifikationsdatenbasis mit einer Mehrzahl von Transformationsvorschriften Zugriff hat,
- FIG 5: ein Beispiel für eine Basisoperation mit einer grundsätzlich nicht begrenzten Anzahl von Parametern,
- FIG 6: eine hierarchische Darstellung einer Basisoperation mit einer Vielzahl von Parametern in Form von Einzel-operationen,
- FIG 7: eine Transformationsvorschrift zur Behandlung eines Sonderfalls einer Basisoperation mit einer im Voraus nicht bekannten Anzahl von Parametern und dementsprechend einer in der Transformationsvorschrift nicht begrenzten Mehrzahl von Eingangsparametern und
- FIG 8: eine graphische Veranschaulichung von Ergebnissen eines rekursiven Aufrufs einer in einer Transformationsvorschrift gemäß FIG 7 einbezogenen weiteren Transformationsvorschrift.

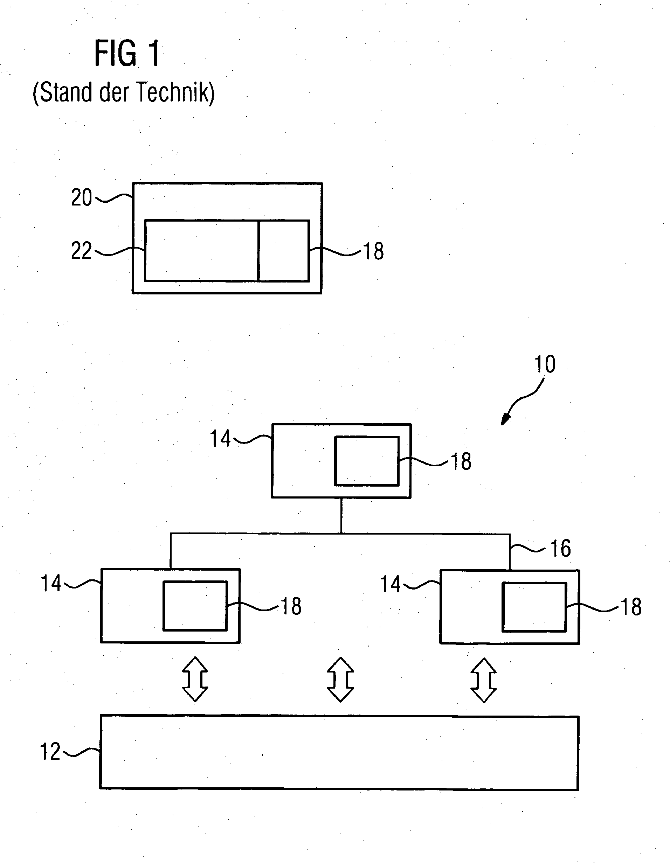

FIG 1 zeigt schematisch stark vereinfacht ein insgesamt mit 10 bezeichnetes Automatisierungssystem zur Steuerung und/oder Überwachung eines nicht näher dargestellten und grundsätzlich beliebigen technischen Prozesses 12. Das Automatisierungssystem 10 kann genau ein Automatisierungsgerät 14 oder eine Mehrzahl von Automatisierungsgeräten 14 umfassen. Bei einer Mehrzahl von Automatisierungsgeräten 14 sind diese üblicherweise in an sich bekannter Art kommunikativ verbunden, z. B. über einen Bus 16. Das oder jedes Automatisierungsgerät 14 ist zur Ausführung eines Steuerungsprogramms 18 vorgesehen und die Funktionalität des jeweiligen Steuerungsprogramms 18 legt die Art und Weise der Beeinflussung des technischen Prozesses 12 durch das Automatisierungssystem 10 fest.

Zur Erstellung, Wartung und Pflege solcher Steuerungsprogramme 18 wird üblicherweise ein Programmiergerät 20 oder ein als Programmiergerät fungierender Standardcomputer verwendet. Zur Erstellung eines Steuerungsprogramms 18 ist dabei auf dem Programmiergerät 20 eine Entwicklungsumgebung 22 vorgesehen, die in an sich bekannter Art und Weise z. B. einen Editor zum Erstellen des jeweiligen Steuerungsprogramms 18 und sodann eine Funktionalität zum Umsetzen des Steuerungsprogramms 18, insbesondere in einen ausführbaren Code umfasst.

Um zu verdeutlichen, dass das jeweilige Steuerungsprogramm 18 mit dem Programmiergerät 20 und insbesondere dessen Entwicklungsumgebung 22 erstellt wird, ist das Steuerungsprogramm 18 auch im Bereich des Programmiergeräts 20 dargestellt. Tatsächlich muss man hinsichtlich eines Steuerungsprogramms 18 auf Seiten des Programmiergeräts 20 sorgfältig unterscheiden. Zum einen befindet sich auf Seiten des Programmiergeräts 20 das Steuerungsprogramm 18 insofern, als auf Seiten des Programmiergeräts 20 eine Grundlage für das Steuerungsprogramm 18, nämlich die das Steuerungsprogramm 18 definierende Abfolge von Befehlen in der jeweiligen Automatisierungssprache, vorgehalten wird. Zum anderen kann sich, zumindest temporär, auf Seiten des Programmiergeräts 20 auch das Steuerungsprogramm 18 in einer durch ein Automatisierungsgerät 14 ausführbaren Form befinden, wenn die Grundlage für das Steuerungsprogramm 18 durch die Entwicklungsumgebung 22 übersetzt wird und das Ergebnis der Übersetzung zumindest temporär auf Seiten des Programmiergeräts 20 gespeichert ist oder gespeichert bleibt. Hier und im Folgenden wird jede Ausprägung eines Steuerungsprogramms 18 auch als Steuerungsprogramm bezeichnet und der Kontext gibt jeweils einen Hinweis darauf, ob es sich um das Steuerungsprogramm in einem Quellcode, in einem Zwischencode oder einem ausführbaren Code handelt.

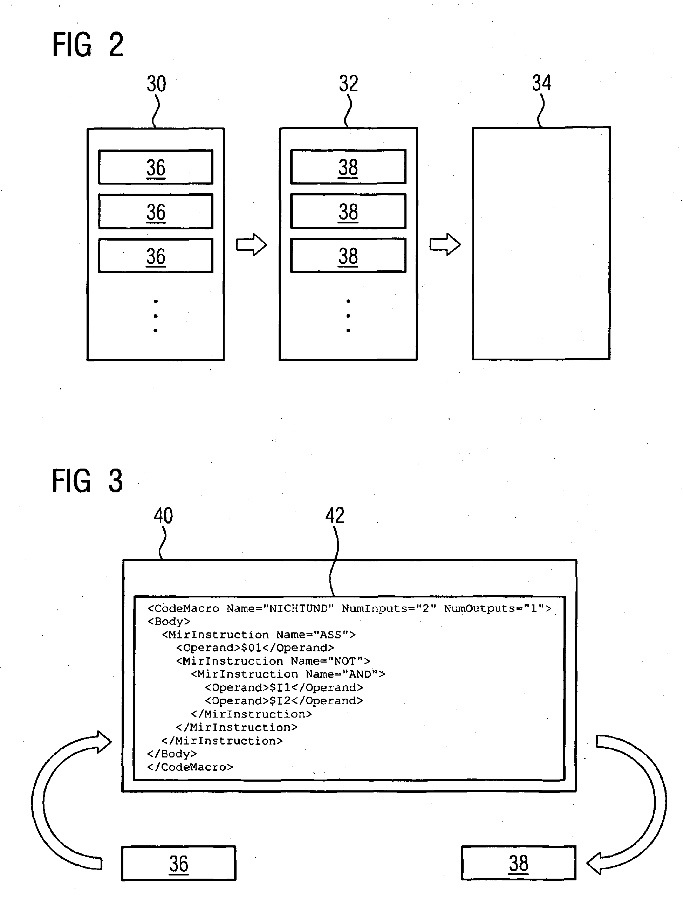

FIG 2 zeigt dazu weitere Details, und zwar für eine Situation, bei der ein Steuerungsprogramm 18 ausgehend von einem Quellcode nicht unmittelbar in einen ausführbaren Code, sondern zunächst in einen Zwischencode übersetzt wird. Die Bezeichnungen "Steuerungsprogramm in einem Quellcode" und "Quellcode" sowie "Steuerungsprogramm in einem Zwischencode" und "Zwischencode" werden hier und im Folgenden mitunter synonym verwendet. Gleiches gilt für das "Steuerungsprogramm im ausführbaren Code" und den "ausführbaren Code".

Bei dem Steuerungsprogramm in einem Quellcode handelt es sich um ein Steuerungsprogramm in der jeweiligen Automatisierungssprache. Bei dem Steuerungsprogramm in einem Zwischencode handelt es sich um dasselbe Steuerungsprogramm mit einer jeweils eine Basisoperation abbildenden Folge von Befehlen in einer jeweiligen Zwischensprache.

Die Darstellung in FIG 2 zeigt in einem ersten Block eine graphische Veranschaulichung des Steuerungsprogramms 18 in der Automatisierungssprache und damit gleichzeitig das Steuerungsprogramm 18 in einem Quellcode. Ein neben diesem Block angeordneter zweiter Block ist eine graphische Veranschaulichung des Steuerungsprogramms 18 in der Zwischensprache und damit gleichzeitig eine graphische Veranschaulichung des Steuerungsprogramms 18 in einem Zwischencode. Ein wiederum neben diesem Block angeordneter dritter Block ist eine graphische Veranschaulichung des Steuerungsprogramms 18 in einem ausführbaren Code. Zur Bezeichnung dieser drei Blöcke, die jeweils unterschiedlichen Zustandsformen des Steuerungsprogramms 18 entsprechen, werden im Folgenden auch kurz die Begriffe Automatisierungssprache 30, Zwischensprache 32 und Maschinensprache 34 verwendet.

FIG 2 verdeutlicht, dass ausgehend von dem Steuerungsprogramm 18 in der Automatisierungssprache 30 zunächst eine Übersetzung oder Umsetzung in die Zwischensprache 32 erfolgt und dass sodann ausgehend von dem Steuerungsprogramm 18 in der Zwischensprache 32 eine Übersetzung oder Umsetzung in eine durch einen Prozessor eines jeweiligen Automatisierungsgeräts 14 ausführbare Maschinensprache 34 erfolgt. Die Erstellung des Steuerungsprogramms 18 in der Automatisierungssprache 30 und sodann zumindest die Übersetzung oder Umsetzung in die Zwischensprache 32 erfolgt mit der Entwicklungsumgebung 22 des Programmiergeräts 20. Die Übersetzung oder Umsetzung in die Maschinensprache 34 kann mit derselben Entwicklungsumgebung 22 erfolgen, kann jedoch auch auf einem anderen Gerät und einer anderen, dafür vorgesehenen Softwarefunktionalität erfolgen.

Bei der Erstellung des jeweiligen Steuerungsprogramms 18 in der Automatisierungssprache 30 verwendet der Programmierer eine Anzahl von in der jeweiligen Automatisierungssprache 30, in welcher der Quellcode erstellt wird, zur Verfügung stehenden Basisoperationen 36. In der Zwischensprache 32 entsteht aus jeder Basisoperation 36 eine Folge 38 von Befehlen in der Zwischensprache 32, wobei die Folge 38 von Befehlen jeweils zumindest einen Befehl in der Zwischensprache 32 oder mehrere Befehle in der Zwischensprache 32 umfasst. Diese Befehlsfolgen 38 in der Zwischensprache 32 werden anschließend oder zu einem gegebenen Zeitpunkt in einen ausführbaren Code in einer Maschinensprache 34 übersetzt oder umgesetzt.

FIG 3 zeigt dazu schematisch vereinfacht die Umsetzung von einer Basisoperation 36 in der Automatisierungssprache 30 in eine Folge 38 von Befehlen in der Zwischensprache 32. Dargestellt ist, dass zum Übersetzen des in Form einer Folge von Basisoperationen 36 in der jeweiligen Automatisierungssprache 30 vorliegenden Steuerungsprogramms 18 in die Zwischensprache 32 auf eine Spezifikationsdatenbasis 40 zugegriffen wird, die für zumindest eine Vielzahl von in dem Steuerungsprogramm 18 verwendbaren Basisoperationen 36 in der Automatisierungssprache 30 jeweils eine Transformationsvorschrift 42 umfasst. Aus Gründen der Übersichtlichkeit ist in FIG 3 nur eine Transformationsvorschrift 42 gezeigt. Die gezeigte Transformationsvorschrift 42 ist in einem maschinenlesbaren Code, nämlich hier einem XML-Code, definiert. Die Transformationsvorschrift 42 ist nachfolgend zur besseren Lesbarkeit nochmals eingeblendet:

```
 <CodeMacro Name="NICHTUND" NumInputs="2" NumOutputs="1">
 <Body>
  <MirInstruction Name="ASS">
    <Operand>$O1</Operand>
    <MirInstruction Name="NOT">
     <MirInstruction Name="AND">
        <Operand>$I1</Operand>
        <Operand>$I2</Operand>
      </MirInstruction>
    </MirInstruction>
  </MirInstruction>
  </Body>
  </CodeMacro>
```

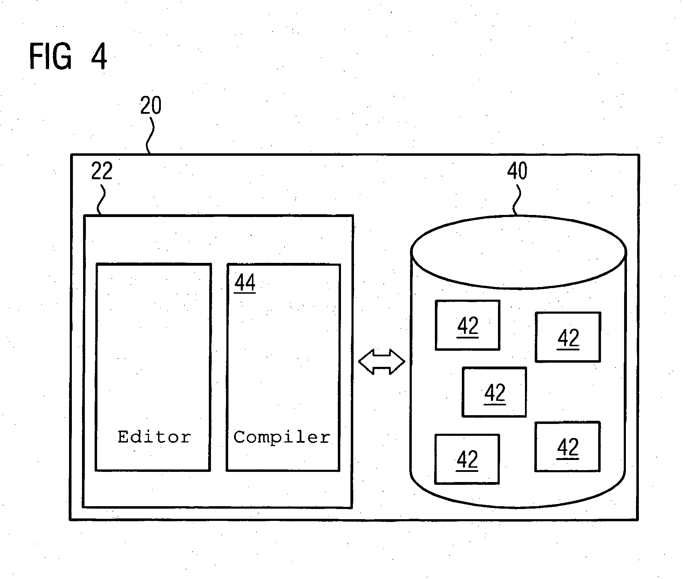

Bei der dargestellten Transformationsvorschrift 42 handelt es sich um eine Vorschrift zur Umsetzung einer Basisoperation 36 in der Automatisierungssprache 30, die eine logische "NICHTUND"-Funktion definiert. Man erkennt, dass die Transformationsvorschrift 42 diese Basisoperation 36 in zwei separate Boolsche Operationen, nämlich eine innere UND-Verknüpfung und eine äußere Negation aufteilt, so dass die Basisoperation 36 NICHTUND ohne weiteres auch durch Prozessoren von Automatisierungsgeräten 14 ausgeführt werden kann, die z. B. diese logische Operation nicht direkt umsetzen, wohl aber logische UND-Verknüpfungen und logische Negationen verarbeiten können. Dadurch, dass die Transformationsvorschrift 42 in einer Spezifikationsdatenbasis 40 vorgehalten wird, kann die Definition einzelner Transformationsvorschriften 42 unabhängig von einem Compiler 44 (FIG 4), der z. B. als Bestandteil einer Entwicklungsumgebung 22 vorgesehen ist, realisiert sein. Die damit vom Compiler 44 unabhängigen Transformationsvorschriften 42 können so jederzeit geändert oder ergänzt werden, ohne dass dafür eine Änderung des Compilers 44 notwendig wäre. Durch Ergänzung der Spezifikationsdatenbasis 40 kann damit gleichsam die Funktionalität des Compilers 44 erweitert werden, ohne den Compiler 44 selbst ändern zu müssen. Die Erweiterung der Funktionalität des Compilers 44 besteht dabei darin, dass durch Hinzufügen von weiteren Transformationsvorschriften 42 zur Spezifikationsdatenbasis 40 die Fähigkeit des Compilers 44, bestimmte Basisoperationen 36 zu übersetzen, stetig ergänzt wird.

Das oben skizzierte Beispiel, bei dem die logische Operation NICHTUND (oder NAND gemäß der gebräuchlichen Bezeichnung in der Fachterminologie) in zwei Operationen aufgeteilt wird, macht auch einen anderen Vorteil des hier vorgestellten Verfahrens deutlich: Die Umsetzung in die Zwischensprache 32 kann zielprozessorspezifisch erfolgen, so dass sich gewährleisten lässt, dass in dem Zwischencode nur Befehle vorhanden sind, die der Prozessor des jeweiligen Automatisierungsgeräts 14 auch umsetzen kann. Umgekehrt kann für besonders mächtige Prozessoren eine bei weniger leistungsfähigen Prozessoren eventuell notwendige Aufteilung von Operationen in zwei oder mehrere einzelne Operationen entfallen, wenn der jeweilige Prozessor die Operation direkt unterstützt. Ohne die Mächtigkeit der Automatisierungssprache einzuschränken, kann damit durch Verwendung einer zu einem jeweiligen Zielprozessor passenden Spezifikationsdatenbasis 40 ein günstiger Ausgangspunkt für einen leicht in einen ausführbaren Code umsetzbaren Zwischencode geschaffen werden.

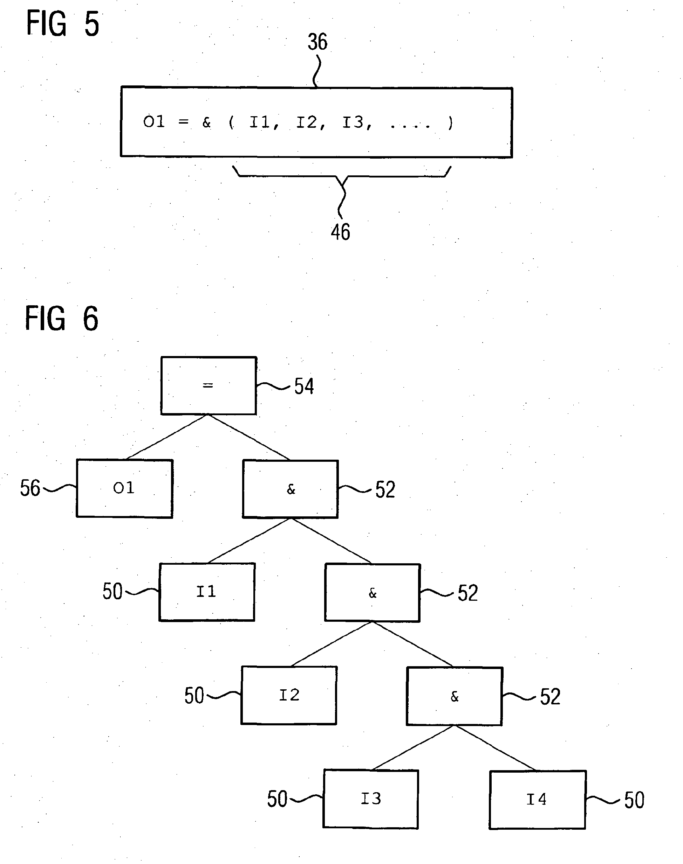

FIG 5 zeigt nunmehr zur Erläuterung eines speziellen Aspekts des hier vorgeschlagenen Verfahrens zum Übersetzen eines in einer Automatisierungssprache 30 vorliegenden Steuerungsprogramms 18 in eine Zwischensprache 32 eine spezielle Basisoperation 36 der Automatisierungssprache 30, nämlich eine Basisoperation 36 mit einer grundsätzlich nicht begrenzten Anzahl von Parametern. Als Beispiel für eine solche Basisoperation 36 ist hier eine logische UND-Verknüpfung gezeigt, die in der Darstellung in FIG 5 durch das Symbol "&" verdeutlicht ist. Die Basisoperation 36 ist für eine Mehrzahl von Eingangsparametern - symbolisch als "I1", "I2", "I3", usw. dargestellt - und zumindest einen Ausgangsparameter - symbolisch als "O1" dargestellt - definiert. Die Gesamtheit der Eingangsparameter wird im Folgenden als Eingangsparameterliste 46 bezeichnet (die Bezeichnung als Eingangsparameterliste wird später auch bei der Erläuterung der Transformationsvorschriften 42 und der an diese übergebenen Parameter verwendet; für diese ist allerdings eine Bezeichnung der jeweiligen Eingangsparameterliste in den Figuren nicht möglich, weil sich solche Listen erst bei der Abarbeitung der jeweiligen Transformationsvorschrift 42 ergeben).

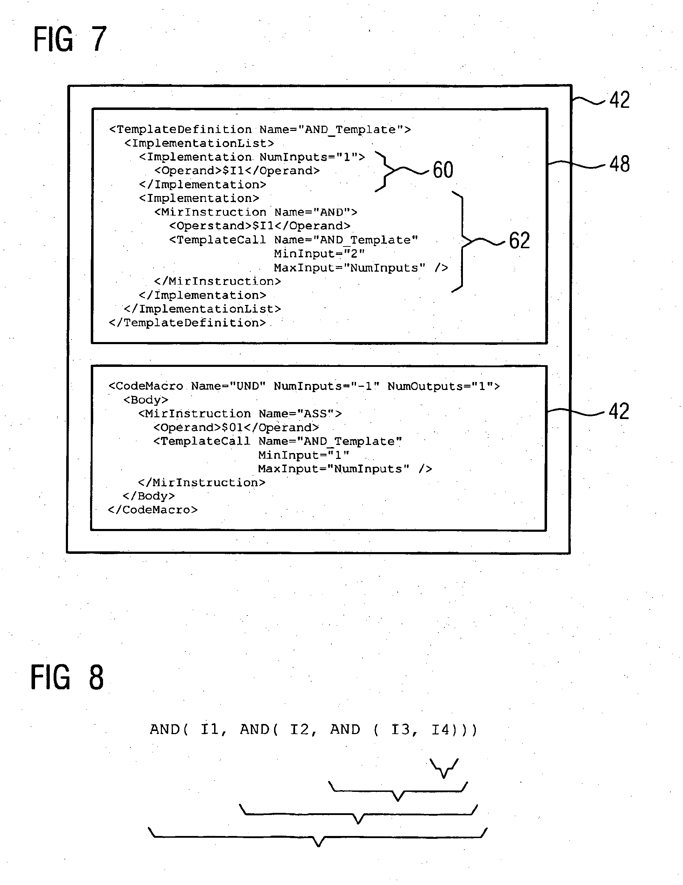

Es ist leicht vorstellbar, dass die Umsetzung einer Basisoperation 36 mit einer grundsätzlich nicht begrenzten Eingangsparameterliste 46 mittels einer statischen Transformationsvorschrift 42 nicht trivial ist. Dieser spezielle Aspekt des hier vorgestellten Verfahrens wird wie folgt gelöst: Zunächst ist vorgesehen, dass die Transformationsvorschrift 42 die Verarbeitung einer Eingangsparameterliste 46 erlaubt. Bei einem Aufruf der Transformationsvorschrift 42 mit einer Eingangsparameterliste 46 mit einer in der Transformationsvorschrift 42 nicht begrenzten Mehrzahl von Eingangsparametern definiert die Transformationsvorschrift 42 die Einbeziehung einer weiteren Transformationsvorschrift 48. Die weitere Transformationsvorschrift 48 definiert eine rekursive Einbeziehung ihrer selbst, also der weiteren Transformationsvorschrift 48, entsprechend einer Anzahl der Eingangsparameter. Zur Erläuterung wird auf die Darstellung in FIG 6 und FIG 7 verwiesen.

FIG 6 zeigt, dass die in FIG 5 dargestellte Basisoperation 36 als eine Kombination von Operationen aufgefasst werden kann, nämlich im dargestellten Beispiel bei z. B. vier Eingangsparametern 50 als eine Kombination mehrerer UND-Verknüpfungen 52 und einer Zuweisungsoperation 54, die das Ergebnis der UND-Verknüpfungen 52 dem jeweiligen Ausgangsparameter 56 zuweist.

FIG 7 zeigt eine mögliche Implementation einer Transformationsvorschrift 42 zur Umsetzung einer Basisoperation 36 wie in FIG 5 dargestellt in die Zwischensprache 32. Auf die Darstellung, dass die Transformationsvorschrift 42 zur Abbildung einer Basisoperation 36 (FIG 3) in eine Folge 38 (FIG 3) von Befehlen in der Zwischensprache 32 vorgesehen ist, ist in FIG 7 verzichtet worden und insoweit wird auf FIG 3 verwiesen. Zur besseren Lesbarkeit ist darüber hinaus der Inhalt der Transformationsvorschrift 42, so wie in FIG 7 gezeigt, nachfolgend nochmals einkopiert:

```
 <TemplateDefinition Name="AND_Template">
  <ImplementationList>
    <Implementation NumInputs="1">
      <Operand>$I1</Operand>
    </Implementation>
    <Implementation>
      <MirInstruction Name="AND">
        <Operand>$I1</Operand>
        <TemplateCall Name="AND_Template"
                       MinInput="2"
                       MaxInput="NumInputs" />
      </MirInstruction>
    </Implementation>
  </ImplementationList>
 </TemplateDefinition>
 <CodeMacro Name="UND" NumInputs="-1" NumOutputs="1">
  <Body>
    <MirInstruction Name="ASS">
      <Operand>$O1</Operand>
      <TemplateCall Name="AND_Template"
                    MinInput="1"
                     MaxInput="NumInputs" />
    </MirInstruction>
  </Body>
 </CodeMacro>
```

Zur Umsetzung der eine logische UND-Verknüpfung beinhaltenden Basisoperation 36 ist demnach eine Transformationsvorschrift 42 mit der Bezeichnung "UND" vorgesehen (siehe: "CodeMacro Name="UND""). Für diese ist mit den Parametern "NumInputs" und "NumOutputs" die Zahl der jeweiligen Ein- und Ausgangsparameter festgelegt. Der Wert "-1" für den Parameter "NumInputs" bedeutet dabei, dass die Anzahl der Eingangsparameter 50 nicht begrenzt ist. Der Wert "1" für den Parameter "NumOutputs" bedeutet dabei, dass genau ein Ausgangsparameter 56 zurückgegeben wird. Indem der Wert "-1" für den Parameter "NumInputs" eine in der Transformationsvorschrift 42 nicht begrenzte Anzahl von Eingangsparametern 50 zulässt, kann die Transformationsvorschrift 42 dementsprechend mit einer Eingangsparameterliste 46 aufgerufen werden, die sämtliche für die zugrunde liegende Basisoperation 36 vorgesehenen Parameter umfasst.

Zur eigentlichen Umsetzung der Funktionalität der zugrunde liegenden Basisoperation 36 ist vorgesehen, dass die Transformationsvorschrift 42 die Einbeziehung einer weiteren Transformationsvorschrift 48 definiert. In der Darstellung in FIG 7 ist dies symbolisch ausgedrückt durch "TemplateCall Name="AND Template"" in der Transformationsvorschrift 42, wobei als Bezeichner der weiteren Transformationsvorschrift 48 der Name "AND_Template" definiert wurde ("TemplateDefinition Name="AND_Template""), unter dem die weitere Transformationsvorschrift 48 aufgerufen werden kann. Der Aufruf erfolgt dabei mit den Randbedingungen MinInput="1" und MaxInput="NumInputs", also der Spezifikation, dass der erste Parameter in der Eingangsparameterliste 46 der erste Parameter der beim Aufruf der Transformationsvorschrift 42 übergebenen Eingangsparameterliste 46 ist und dass danach so viele Parameter aus der beim Aufruf der Transformationsvorschrift 42 übergebenen Eingangsparameterliste 46 übergeben werden, wie der Parameter "NumImputs" definiert. Dies bewirkt beim Aufruf der weiteren oder inneren Transformationsvorschrift 48 zum Umsetzen der in FIG 5 gezeigten Basisoperation 36 die Übergabe der Eingangsparameter 50 I1, I2, I3 und I4.

Aus der weiteren oder inneren Transformationsvorschrift 48 wird diese bei Bedarf selbst rekursiv aufgerufen. Der Aufruf ("TemplateCall Name="AND Template"") erfolgt dabei mit dem für die weitere/innere Transformationsvorschrift 48 definierten Namen und mit den Randbedingungen MinInput="2" und MaxInput="NumInputs". Auf diese Weise wird in der Eingangsparameterliste 46 als erster Parameter der zweite Parameter der beim Aufruf der weiteren/inneren Transformationsvorschrift 48 übergebenen Eingangsparameterliste 46 übergeben. Danach werden so viele Parameter aus der beim Aufruf der weiteren/inneren Transformationsvorschrift 48 übergebenen Eingangsparameterliste 46 übergeben, wie der Parameter "NumImputs" definiert. Dies führt dazu, dass die weitere/innere Transformationsvorschrift rekursiv mit folgenden Parameterlisten aufgerufen wird: [12, 13, I4], [13, I4], [I4]. Beim letzten Rekursionsschritt, wenn also genau ein Eingangsparameter 50 übergeben wird, wird ein für die Verarbeitung genau eines Eingangsparameters 50 vorgesehener Implementationsblock aufgerufen ("Implementation NumInputs="1""). Dort wird der übergebene Parameter, nämlich 14, für die Umsetzung in den Zwischencode übernommen ("<Operand>$I1</Operand>"). Wenn dann die Rekursion wieder aufgelöst wird, werden zunächst die Eingangsparameter 50 gemäß der Eingangsparameterliste 46 mit [13, I4] verarbeitet. Der Eingangsparameter 50 14 wurde bereits im letzten Rekursionsschritt verarbeitet. In diesem Rekursionsschritt werden dann zur Umsetzung in die Zwischensprache die logische UND-Verknüpfung und der Eingangsparameter 50 I3 hinzugefügt ("<MirInstruction Name="AND">" und "<Operand>$I1</Operand>"). Dann erfolgt die Verarbeitung der Eingangsparameter 50 gemäß der Eingangsparameterliste 46 mit [12, 13, I4]. Die Eingangsparameter 50 13 und 14 wurden bereits in vorangehenden Rekursionsschritten bearbeitet. In diesem Rekursionsschritt werden dann zur Umsetzung in die Zwischensprache erneut die logische UND-Verknüpfung und der Eingangsparameter 50 12 hinzugefügt ("<MirInstruction Name="AND">" und "<Operand>$I1</Operand>"). Danach erfolgt die Umsetzung in den Zwischencode aufgrund des ursprünglichen, nicht-rekursiven Aufrufs der weiteren/inneren Transformationsvorschrift 48, also gemäß der Eingangs-parameterliste 46 mit [I1, I2, I3, I4]. Dabei werden erneut die logische UND-Verknüpfung und der Eingangsparameter 50 I1 hinzugefügt ("<MirInstruction Name="AND">" und "<Operand>$I1</Operand>"). Das Ergebnis im Zwischencode lautet demnach z. B. wie folgt: AND(I1, AND( I2, AND ( I3, I4))). Dies ist unterhalb von FIG 7 nochmals in FIG 8 dargestellt und die überlappenden geschweiften Klammern (nicht bezeichnet) stellen das Ergebnis der Rekursionsschritte dar, wobei die kleinste Klammer unter 14 den letzten, aber zuerst vollständig ausgeführten Rekursionsschritt symbolisiert.

Wenn der Aufruf der weiteren/inneren Transformationsvorschrift 48 und die Rekursion abgeschlossen ist, erfolgt die Umsetzung in den Zwischencode gemäß der Definition in der (äußeren) Transformationsvorschrift 42. Dort ist definiert, dass die Zuweisungsoperation 54 ("<MirInstruction Name ="ASS">") auf den in der Parameterliste spezifizierten Ausgangsparameter ("<Operand>$O1</Operand>") wirkt, so dass sich im Ergebnis eine Zuweisung der durch Aufruf der weiteren/inneren Transformationsvorschrift 48 aufgelösten UND-Verknüpfungen an den Ausgangsparameter 56 O1 ergibt.

Die soeben beschriebene Transformationsvorschrift 42 und die zugehörige weitere/innere Transformationsvorschrift 48 können auch zusammen als eine Transformationsvorschrift 42 mit einer äußeren Transformationsvorschrift 42 und der weiteren Transformationsvorschrift 48 als einer inneren Transformationsvorschrift aufgefasst werden. Deshalb sind in der Darstellung in FIG 7 die beiden Transformationsvorschriften 42, 48 von einem selbst auch als Transformationsvorschrift 42 bezeichneten Block umfasst.

Eine Besonderheit besteht bei der dargestellten Implementation der weiteren/inneren Transformationsvorschrift 48 noch hinsichtlich der Behandlung einer Situation mit genau einem Eingangsparameter und Situationen mit mehreren Eingangsparametern 50. Dafür sind jeweils ein erster und ein zweiter Implementationsblock 60, 62 vorgesehen. Der erste Implementationsblock 60 ist für die Behandlung einer Situation mit genau einem Eingangsparameter 50 vorgesehen ("Implementation NumInputs="1"") und definiert eine Übersetzung oder Umsetzung der zugrunde liegenden Basisoperationen 36 oder eines Teilaspekts der zugrunde liegenden Basisoperationen 36 für den Fall genau eines Eingangsparameters 50. Der zweite Implementationsblock 62, beginnend ebenfalls mit dem Schlüsselwort "Implementation", ist für die Behandlung aller anderen Situationen, also von Situationen mit mehr als einem Eingangsparameter 50, vorgesehen und definiert eine Übersetzung oder Umsetzung der zugrunde liegenden Basisoperationen 36 oder eines Teilaspekts der zugrunde liegenden Basisoperationen 36 für den Fall mehrerer Eingangsparameter 50. Dabei umfasst der zweite Implementationsblock 62 die rekursive Einbeziehung der weiteren Transformationsvorschrift 48. Über die dargestellte Ausführungsform mit genau einem ersten und einem zweiten Implementationsblock 60, 62 hinaus können auch weitere Implementationsblöcke vorgesehen sein, nämlich mindestens ein Implementationsblock für eine jeweils feste Anzahl von Eingangsparametern 50 und ein Implementationsblock für eine variable Anzahl von Eingangsparametern 50. Die beschriebene Situation ist also ein Sonderfall dieser allgemeineren Situation, bei der die feste Anzahl von Eingangsparametern gerade "eins" ist und bei der kein weiterer Implementationsblock für eine jeweils feste Anzahl von Eingangsparametern vorgesehen ist und bei welcher der zweite Implementationsblock für eine variable Anzahl von Eingangsparametern 50 vorgesehen ist.

Wenn hier von einer Übersetzung oder Umsetzung der zugrunde liegenden Basisoperationen 36 oder eines Teilaspekts der zugrunde liegenden Basisoperationen 36 die Rede ist, trägt dies dem dargestellten Beispiel Rechnung, bei dem die weitere/innere Transformationsvorschrift 48 die mehrfache UND-Verknüpfung realisiert und die äußere Transformationsvorschrift 42 neben dem Aufruf der weiteren/inneren Transformationsvorschrift 48 nur eine Zuweisung an den gemäß der zugrunde liegenden Basisoperation 36 vorgesehenen Ausgangsparameter realisiert. Unabhängig davon, ob die weitere/innere Transformationsvorschrift 48 eventuell nur einen Teilaspekt der Über- oder Umsetzung der zugrunde liegenden Basisoperationen 36 definiert, ist auch die Definition einer Über- oder Umsetzung eines solchen Teilaspekts noch zumindest ein Teil einer Definition einer Über- oder Umsetzung der zugrunde liegenden Basisoperation 36, so dass die Formulierung als Teilaspekt keinesfalls einschränkend ausgelegt werden darf.

## Patentansprüche

1. Verfahren zum automatischen Übersetzen eines Steuerungsprogramms (18) in einer Automatisierungssprache (30) in eine Zwischensprache (32),
wobei das Steuerungsprogramm (18) eine Mehrzahl von Basisoperationen (36) umfasst und
wobei jede Basisoperation (36) automatisch in eine Folge (38) von Befehlen in der Zwischensprache (32) abgebildet wird,
wobei zum Übersetzen des Steuerungsprogramms (18) in die Zwischensprache (32) auf eine Spezifikationsdatenbasis (40) zugegriffen wird, die für zumindest eine Vielzahl von in einem Steuerungsprogramm (18) verwendbaren Basisoperationen (36) in der Automatisierungssprache (30) jeweils eine Transformationsvorschrift (42) umfasst und
wobei die Transformationsvorschrift (42) die Verarbeitung einer Eingangsparameterliste (46) erlaubt,
**dadurch gekennzeichnet,**
**dass** bei einem Aufruf der Transformationsvorschrift (42) mit einer Eingangsparameterliste (46) mit einer in der Transformationsvorschrift (42) nicht begrenzten Mehrzahl von Eingangsparametern (50) die Transformationsvorschrift (42) die Einbeziehung einer weiteren Transformationsvorschrift (48) definiert und
**dass** die weitere Transformationsvorschrift (48) eine rekursive Einbeziehung der weiteren Transformationsvorschrift (48) entsprechend einer Anzahl der Eingangsparameter (50) definiert.

2. Verfahren nach Anspruch 1, wobei eine Transformationsvorschrift (42) mit einer in der Transformationsvorschrift (42) nicht begrenzten Mehrzahl von Eingangsparametern (50) in der zur Einbeziehung vorgesehenen weiteren Transformationsvorschrift (48) zumindest einen ersten und einen zweiten Implementationsblock (60, 62) umfasst, wobei mindestens ein erster Implementationsblock (60) eine Übersetzung der zugrunde liegenden Basisoperationen (36) für einen Fall einer festen Anzahl von Eingangsparametern (50) definiert, wobei der zweite Implementationsblock (62) eine Übersetzung der zugrunde liegenden Basisoperationen (36) für einen Fall einer variablen Anzahl von Eingangsparametern (50) definiert und wobei zumindest der zweite Implementationsblock (62) die rekursive Einbeziehung der weiteren Transformationsvorschrift (48) umfasst.

3. Verfahren nach Anspruch 1 oder 2, wobei eine Transformationsvorschrift (42) mit einer in der Transformationsvorschrift (42) nicht begrenzten Mehrzahl von Eingangsparametern (50) in der zur Einbeziehung vorgesehenen weiteren Transformationsvorschrift (48) zumindest einen ersten und einen zweiten Implementationsblock (60, 62) umfasst, wobei der erste Implementationsblock (60) eine Übersetzung der zugrunde liegenden Basisoperationen (36) für den Fall genau eines Eingangsparameters (50) definiert und wobei der zweite Implementationsblock (62) eine Übersetzung der zugrunde liegenden Basisoperationen (36) für den Fall mehrerer Eingangsparameter (50) definiert und die rekursive Einbeziehung der weiteren Transformationsvorschrift (48) umfasst.

4. Verfahren nach Anspruch 1, 2 oder 3, wobei in der Spezifikationsdatenbasis (40) jede Transformationsvorschrift (42, 48) in einem maschinenlesbaren Code, insbesondere einem XML-Code, definiert ist.

5. Entwicklungsumgebung (22) zur Erstellung und Wartung von Steuerungsprogrammen (18) als Automatisierungslösung für einen zu steuernden technischen Prozess (12)
wobei die Entwicklungsumgebung (22) eine Implementation des Verfahrens in Anspruch 1, 2, 3 oder 4 und eine Zugriffsmöglichkeit auf eine Spezifikationsdatenbasis (40) umfasst und
wobei die Spezifikationsdatenbasis (40) für zumindest eine Vielzahl von in einem Steuerungsprogramm (18) verwendbaren Basisoperationen (36) in der Automatisierungssprache (30) jeweils eine Transformationsvorschrift (42, 48) umfasst.

6. Computerprogramm mit Programmcodemitteln, um alle Schritte von jedem beliebigen der Ansprüche 1 bis 4 durchzuführen, wenn das Computerprogramm auf einem Programmiergerät (20) zur Erstellung und Wartung von Steuerungsprogrammen (18) als Automatisierungslösung für einen zu steuernden technischen Prozess (12) ausgeführt wird.

7. Programmiergerät (20) zur Erstellung und Wartung von Steuerungsprogrammen (18) als Automatisierungslösung für einen zu steuernden technischen Prozess (12) mit einer Verarbeitungseinheit und einem Speicher, in den ein Computerprogramm nach Anspruch 5 geladen ist, das im Betrieb des Programmiergeräts (20) durch dessen Verarbeitungseinheit ausgeführt wird.

## Claims

1. Method for automatically translating a control program (18) in an automation language (30) into an intermediate language (32), wherein the control program (18) comprises a plurality of basic operations (36) and wherein each basic operation (36) is automatically mapped to a sequence (38) of instructions in the intermediate language (32),
wherein, in order to translate the control program (18) into the intermediate language (32), a specification database (40) comprising a respective transformation rule (42) for at least a multiplicity of basic operations (36) in the automation language (30) which can be used in a control program (18) is accessed, and
wherein the transformation rule (42) allows an input parameter list (46) to be processed,
**characterized**
**in that**, if the transformation rule (42) is called with an input parameter list (46) having a plurality of input parameters (50), unlimited in the transformation rule (42), the transformation rule (42) defines the inclusion of a further transformation rule (48), and
**in that** the further transformation rule (48) defines a recursive inclusion of the further transformation rule (48) according to a number of the input parameters (50).

2. Method according to Claim 1, wherein a transformation rule (42) with a plurality of input parameters (50), unlimited in the transformation rule (42), comprises, in the further transformation rule (48) intended to be included, at least one first and one second implementation block (60, 62), wherein at least one first implementation block (60) defines translation of the underlying basic operations (36) for a case of a fixed number of input parameters (50), wherein the second implementation block (62) defines translation of the underlying basic operations (36) for a case of a variable number of input parameters (50), and wherein at least the second implementation block (62) comprises the recursive inclusion of the further transformation rule (48).

3. Method according to Claim 1 or 2, wherein a transformation rule (42) with a plurality of input parameters (50), unlimited in the transformation rule (42), comprises, in the further transformation rule (48) intended to be included, at least one first and one second implementation block (60, 62), wherein the first implementation block (60) defines translation of the underlying basic operations (36) for the case of precisely one input parameter (50), and wherein the second implementation block (62) defines translation of the underlying basic operations (36) for the case of a plurality of input parameters (50) and comprises the recursive inclusion of the further transformation rule (48).

4. Method according to Claim 1, 2 or 3, wherein each transformation rule (42, 48) is defined in the specification database (40) in a machine-readable code, in particular an XML code.

5. Development environment (22) for creating and maintaining control programs (18) as an automation solution for a technical process (12) to be controlled, wherein the development environment (22) comprises an implementation of the method in Claim 1, 2, 3 or 4 and a possibility of accessing a specification database (40) and wherein the specification database (40) comprises a respective transformation rule (42, 48) for at least a multiplicity of basic operations (36) in the automation language (30) which can be used in a control program (18).

6. Computer program having program code means for carrying out all steps of any of Claims 1 to 4 when the computer program is executed on a programming device (20) for creating and maintaining control programs (18) as an automation solution for a technical process (12) to be controlled.

7. Programming device (20) for creating and maintaining control programs (18) as an automation solution for a technical process (12) to be controlled, having a processing unit and a memory into which a computer program according to Claim 5 is loaded, which program is executed by the processing unit of the programming device (20) during operation of the latter.

## Revendications

1. Procédé de traduction automatique en un langage ( 32 ) intermédiaire d'un programme ( 18 ) de commande en un langage ( 30 ) d'automatisation,
dans lequel le programme ( 18 ) de commande comprend une multiplicité d'opérations ( 36 ) de base et
dans lequel chaque opération ( 36 ) de base est reproduite automatiquement en une succession ( 38 ) d'instructions dans le langage ( 32 ) intermédiaire,
dans lequel, pour la traduction du programme ( 18 ) de commande dans le langage ( 32 ) intermédiaire, on accède à une base ( 40 ) de données de spécification qui comprend, pour au moins une pluralité d'opérations ( 36 ) de base pouvant être utilisées dans un programme ( 18 ) de commande dans le langage ( 30 ) d'automatisation, respectivement une prescription ( 42 ) de transformation et
dans lequel la prescription ( 42 ) de transformation permet le traitement d'une liste ( 46 ) de paramètres d'entrée, **caractérisé**
**en ce que**, lors d'un appel de la prescription ( 42 ) de transformation, par une liste ( 46 ) de paramètres d'entrée ayant une multiplicité, non limitée dans la prescription ( 42 ) de transformation, de paramètres ( 50 ) d'entrée, la prescription ( 42 ) de transformation définit l'intégration d'une autre prescription ( 48 ) de transformation et
**en ce que** l'autre prescription ( 48 ) de transformation définit une intégration récursive de l'autre prescription ( 48 ) de transformation conformément à un nombre des paramètres ( 50 ) d'entrée.

2. Procédé suivant la revendication 1, dans lequel une prescription ( 42 ) de transformation ayant une multiplicité, non limitée dans la prescription ( 42 ) de transformation, de paramètres ( 50 ) d'entrée comprend dans l'autre prescription ( 48 ) de transformation prévue pour l'intégration au moins un premier et un deuxième blocs ( 60 , 62 ) de mise en ouvre, au moins un premier bloc ( 60 ) de mise en ouvre définissant une traduction des opérations ( 36 ) de base dans le cas d'un nombre fixe de paramètres ( 50 ) d'entrée, le deuxième bloc ( 62 ) de mise en ouvre définissant une traduction des opérations ( 36 ) de base dans le cas d'un nombre variable de paramètres ( 50 ) d'entrée et dans lequel au moins le deuxième bloc ( 62 ) de mise en oeuvre comprend l'intégration récursive de l'autre prescription ( 48 ) de transformation.

3. Dispositif suivant la revendication 1 ou 2, dans lequel une prescription ( 42 ) de transformation ayant une multiplicité, non limitée dans la prescription ( 42 ) de transformation, de paramètres ( 50 ) d'entrée dans l'autre prescription ( 48 ) de transformation prévue pour l'intégration comprend au moins un premier et un deuxième blocs ( 60 , 62 ) de mise en oeuvre, le premier bloc ( 60 ) de mise en oeuvre définissant une traduction des opérations ( 36 ) de base dans le cas précis d'un paramètre ( 50 ) d'entrée, et le deuxième bloc ( 62 ) de mise en oeuvre définissant une traduction des opérations ( 36 ) de base dans le cas de plusieurs paramètres ( 50 ) d'entrée et comprenant l'intégration récursive de l'autre prescription ( 48 ) de transformation.

4. Dispositif suivant la revendication 1, 2 ou 3, dans lequel dans la base ( 40 ) de données de spécification, chaque prescription ( 42, 48 ) de transformation est définie dans un code pouvant être exploité par ordinateur, notamment un code XML.

5. Environnement ( 22 ) de développement pour la création et l'entretien de programmes ( 18 ) de commande comme solution d'automatisation d'un processus ( 12 ) technique à commander, dans lequel l'environnement ( 22 ) de développement comprend une mise en oeuvre du procédé de la revendication 1, 2, 3 ou 4 et une possibilité d'accès à une base ( 40 ) de données de spécification et
dans lequel la base ( 40 ) de données de spécification comprend, pour au moins une pluralité d'opérations ( 36 ) de base pouvant être utilisées dans un programme ( 18 ) de commande, dans le langage ( 30 ) d'automatisation respectivement une prescription ( 42, 48 ) de transformation.

6. Programme d'ordinateur ayant des moyens de code de programme pour effectuer tous les stades de n'importe laquelle des revendications 1 à 4, lorsque le programme d'ordinateur est exécuté sur un appareil ( 20 ) de programmation pour la création et l'entretien de programmes ( 18 ) de commande comme solution d'automatisation d'un processus ( 12 ) technique à commander.

7. Appareil ( 20 ) de programmation pour la création et l'entretien de programmes ( 18 ) de commande comme solution d'automatisation d'un processus ( 12 ) technique à commander, comprenant une unité de traitement et une mémoire dans laquelle un programme d'ordinateur suivant la revendication 5 est chargé, qui est exécuté lorsque l'appareil ( 20 ) de programmation fonctionne par son unité de traitement.
